Europäisches Patentamt

(19) European Patent Office

Office européen des brevets

(11) Publication number: **0 297 797 B1**

## EUROPEAN PATENT SPECIFICATION

(12)

(45) Date of publication of patent specification :
08.01.92 Bulletin 92/02

(51) Int. Cl.⁵ : **B60T 8/42**

(21) Application number : 88305806.7

(22) Date of filing : 23.06.88

(54) An hydraulic anti-skid vehicle braking system.

(30) Priority : 27.06.87 GB 8715129

(43) Date of publication of application :
04.01.89 Bulletin 89/01

(45) Publication of the grant of the patent :
08.01.92 Bulletin 92/02

(84) Designated Contracting States :
DE ES FR GB IT

(56) References cited :
EP-A- 0 202 845
DE-A- 2 450 874
DE-A- 3 437 994
GB-A- 2 161 231
GB-A- 2 188 111
Mc Graw Hill Encyclopedia of Science &
Technology,6 edition,1987
Mc Graw Hill Book Company, New York,
Volume 17, page 402-404

(73) Proprietor : LUCAS INDUSTRIES public limited
company
Great King Street
Birmingham, B19 2XF West Midlands (GB)

(72) Inventor : Burton, Robert Throwell
37, Newbold Terrace East
Leamington Spa CV32 4EY (GB)
Inventor : Taft, Phillip Augustus
9, Beechwood Close
Cheswick Green Solihull, B90 4HU (GB)

(74) Representative : Waite, Anthony William et al
MARKS & CLERK Alpha Tower Suffolk Street
Queensway
Birmingham B1 1TT (GB)

## Description

This invention relates to an hydraulic vehicle braking system of the general kind including a primary pressure source operable to apply braking pressure to a wheel brake actuator, sensing means arranged to sense an incipient wheel slip condition of the wheel during running of the vehicle, and a modulator device influenced in response to a signal from the sensing means so as to modify the braking pressure in the brake actuator and thereby the braking force applied to the wheel, in order to correct the wheel slip condition.

Some known systems of this general kind employ solenoid valves to modulate fluid flow from wheel-driven pumps in order to release and re-apply the brakes in an anti-skid mode. Whilst such systems can be generally satisfactory in service, they have the disadvantage of being electrically and mechanically complex and can be insufficiently sensitive to cope with extremes of operation.

Another approach is illustrated in DE-A-1916662, which describes an anti-lock braking system in which a main pressure source is connected to a wheel brake actuator via a normally open valve, and a modulator is provided having a chamber in communication with the actuator, the volume of the chamber being variable by movement of a motor driven piston such that in response to occurrence of a skid condition at the braked wheel the piston is moved to increase the volume of the chamber so as to decrease the braking pressure and also actuate the valve to isolate the actuator from a pressure source, reverse operation of the motor re-opening the valve and returning the piston so as to re-pressurise the actuator. Failure of the electrical supply in such a system during anti-skid operation could prevent the valve from re-opening to re-establish normal braking.

In a similar system illustrated in GB-A-2188111, published 23.09.87, the piston is driven by a stepper motor against the action of a return spring in order to increase the volume of the chamber but may not be capable of returning the piston to re-open the valve in the event of motor failure or jamming.

According to the present invention, the piston is stepped to provide a first area partially defining the chamber and a second area subject to the pressure from the primary source, such that, in the event of failure of the stepper motor when the cut off valve has disconnected the primary source from the actuator, the piston is moved by pressure from the primary pressure source so as to open the valve and reconnect the source to the actuator.

Conveniently, the variation of said braking pressure is controlled by varying the speed of the stepper motor.

The invention will now be described, by way of example, with reference to the single accompanying drawing which is a diagrammatic representation of one embodiment of the braking system of the invention.

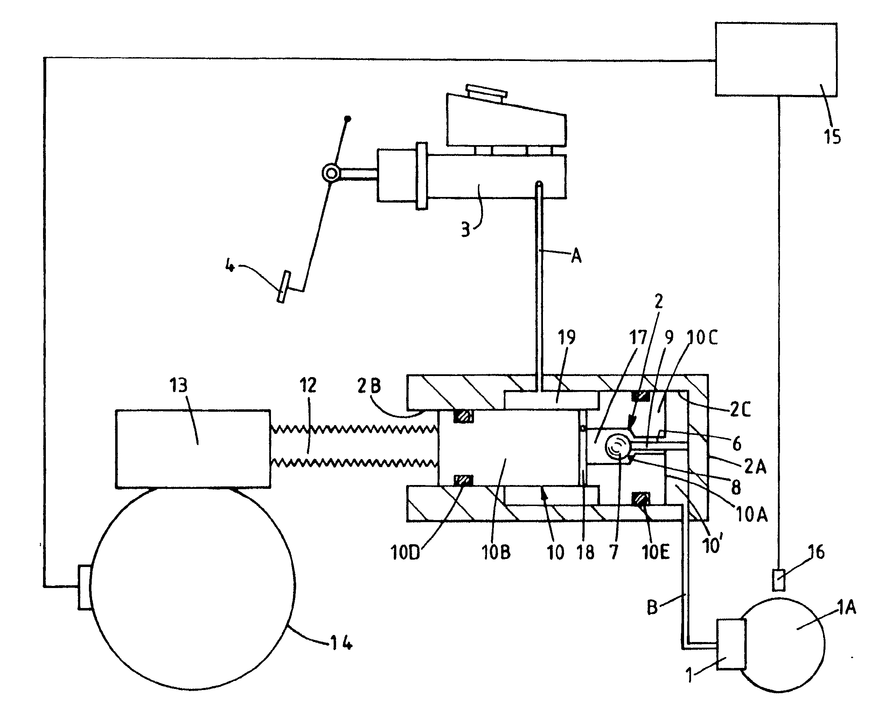

The braking system illustrated in the drawing includes a brake 1 associated with a wheel 1A to be braked and supplied through conduits A, B via a control valve 2 from a primary pressure source in the form of a master cylinder 3 actuated by a pedal 4. The valve 2 is housed within a body 5 having an internal port 6 through which communication is normally established between the brake 1 and master cylinder 3. The port is surrounded by a seat 8 with which cooperates a valve member 7, illustrated as a ball, rigidly supported relative to the housing by a stem 9 projecting internally from end wall 2A of the body. A stepped piston 10 is slidable within a cylindrical bore of the body, and a chamber 10' is formed between the free end 10A of the piston and the opposed end 2A of the body, the volume of the chamber being variable by movement of the piston 10 along the cylindrical bore, for the purpose to be described. A threaded shaft 12 projects axially from the other end of the piston and is connected to a drive mechanism 13 from which the shaft is driven in rotation from a pulsed input stepper motor 14, which may conveniently be of the switched reluctance type, in order to drive the piston axially along the cylinder bore. The motor operates under the control of a micro-processor 15 in response to signals emanating from a wheel speed sensor 16 located adjacent the wheel 1A.

The body 2 is stepped to provide bore portions 2B, 2C, within which slide smaller and larger diameter parts 10B, 10C of the piston 10, the piston parts carrying respective seals 10D, 10E engaging the internal surfaces of the corresponding bore portions in fluid tight manner. In the arrangement illustrated, the valve element 7 is disposed within a chamber 17 of the larger diameter piston part 10C, the chamber 17 communicating via a radial passage 18 with a space 19 formed between the smaller diameter piston part 10B and the internal wall of the bore portion 2C. The flow port 6 and valve seat 8 are formed, in this embodiment, in the large diameter piston part 10C, the length of the stem 9 being such that the valve member is normally held clear of the seat 8 until the piston 10 is moved by the stepper motor in the manner to be described.

Normal braking is effected with the components in their positions shown, fluid under pressure from the master cylinder 3 being supplied via conduit A, the space 19, radial passage 18, chamber 17, port 6, and conduit B to the brake 1.

When an incipient skid condition is sensed by the wheel sensor 16, the micro-processor 15 actuates the motor 14, which rotates the shaft 12 via the drive mechanism 13 in a direction such as to move the piston 10 to the left, as seen in the drawing. This brings the seat 8 into engagement with the valve member 7 to close off the port 6, thereby interrupting communication between the master cylinder 3 and brake 1. Such leftward movement of the piston also increases the volume of the chamber 10' between the piston part 10C and the end of the cylinder, thereby reducing pressure in the brake until a cessation of the skid condition is sensed by the sensor 16. When this happens, the micro-processor 15 causes the motor 14 to reverse and return the piston 10 towards its original position, which results in a decrease in volume of the chamber 10' and re-application of pressure to the brake 1. The reverse movement of the piston disengages the seat 8 from the ball 7 to re-establish communication between the master cylinder 3 and the brake and thereby permit resumption of normal braking.

In the event that the motor fails when the valve is in its closed position, the differential pressure from the master cylinder acting on the larger diameter piston portion 10C will force the piston 10 to the right to re-open the valve and restore communication between the master cylinder and brake to enable the brake to be reapplied. For this action to be possible, either the threaded connection between the shaft 12 and drive mechanism 13 must be reversible or some other means must be provided, in order to permit the necessary axial movement of the piston for brake re-application.

The stepper motor is sensitive to frequencies in the KHz range and its rotational speed is subject to very fine control by the action of the micro-processor 37, enabling the motor to respond with great sensitivity to signals from the sensor 16. This permits the brake pressure dump and re-apply rates to be varied very rapidly and sensitively for the purpose of skid control. The micro-processor can be used to monitor a given anti-skid cycle of brake release/brake re-apply and to store relevant information such as the pressure dump time and subsequent duration of pressure re-application to reach the skid point once more. The micro-processor can then use this information for the adaptive control of subsequent anti-skid cycles so as to improve the braking effect and bring it towards the ideal in which as little actual braking effort as possible is lost during an anti-skid operation. This is possible because the motor speed and direction can be changed very rapidly to respond to the requirements of the system.

It will be understood that the switched reluctance motor described may be replaced, in any embodiment of the invention, by any appropriate form of reversible stepper motor system which is susceptible to digital control.

Although the invention has been described in relation to various forms of anti-skid braking system, it will be understood that the invention can equally well be applied to the correction of wheel spin, i.e. wheel slip under acceleration, as distinct from wheel skid which occurs under deceleration. As will be understood by those familiar with the art, it would be necessary to arrange for the master cylinder to be isolated from the brake during an anti-slip mode of operation and the microprocessor would respond to excessive rather than insufficient wheel speed and operate the system to apply the brake temporarily in order to correct the sensed wheel-slip condition.

## Claims

1. An hydraulic vehicle braking system comprising a primary pressure source (3) operable to apply braking pressure to a wheel brake actuator (1), sensing means (16) arranged to sense an incipient slip condition of the wheel (1A) during running of the vehicle, and a modulator device (10), actuated by a stepper motor (14) under the influence of control means (15) in response to signals emanating from the wheel slip sensing means (16), so as to control the braking pressure in the brake actuator (1) in order to reduce the braking force applied to the wheel (1A) to correct the slip condition, the modulator defining a chamber (10') of which the volume may be varied by movement of a piston (10) under the action of the stepper motor in order to reduce the braking pressure in the actuator (1) during said slip condition, the piston being arranged so that said movement thereof results in the actuation of a cut off valve (7) to disconnect the primary pressure source (3) from the actuator during the slip condition and to re-connect the source (3) and actuator when the slip condition has been corrected, characterised in that the piston (10) is stepped to provide a first area partially defining the chamber (10') and a second area subject to the pressure from the primary source (3), such that, in the event of failure of the stepper motor when the cut off valve has disconnected the primary source (3) from the actuator, the piston is moved by pressure from the primary pressure source (3) so as to open the valve and reconnect the source to the actuator.

2. A braking system according to Claim 1, characterised in that the chamber (10') is defined between one end of the piston and fixed end and cylindrical walls of the cylinder, and a second chamber (19) connected to the primary pressure source (3) is defined between a fixed end wall and cylindrical wall of the cylinder and a shoulder of the piston spaced from and opposed to said fixed piston end wall, the chamber (19) being connected to the primary pressure source so that the piston shoulder is subject to fluid pressure in the primary pressure source.

3. A braking system according to Claim 1 or Claim 2, characterised in that a conduit (6, 17, 18) interconnects the chambers (10', 19), part of the conduit forming a valve seat (6A) and containing a valve element (7) fixed with respect to the cylinder, the valve element being engaged with and disengaged from the seat (6A) by movement of the piston.

4. A braking system according to Claim 3, wherein the valve element is supported on a stem (9) fixed to the cylinder.

5. A braking system according to Claim 4, wherein the valve element supporting stem (9) extends through a part (6) of the conduit and through the valve seat (6A) and supports the valve element (7) in a predetermined position with respect to the housing so that operation of the stepper motor to move the piston causes corresponding opening and closing of the cut-off valve.

6. A braking system according to any one of claims 3 to 5, characterised in that the conduit includes an axially extending portion (6, 17) and a radially extending portion (18).

7. A braking system according to any one of the preceding claims, wherein the variation of said braking pressure is controlled by varying the speed of the stepper motor (14).

8. A braking system according to any one of the preceding claims, characterised in that the stepper motor (14) is operatively connected to the piston (10) by mechanism which includes a reversible screw thread (12) permitting the pressure from the primary pressure source acting on the second piston area to move the piston in a direction such as to open the cut-off valve.

## Patentansprüche

1. Ein hydraulisches Fahrzeug-Bremssystem, mit einer Primärdruckquelle (3), die so arbeitet, daß sie an ein Radbrems-Betätigungselement (1) einen Bremsdruck anlegt, einer Sensoreinrichtung (16), die so angeordnet ist, daß sie einen beginnenden Schlupfzustand des Rades (1A) während der Bewegung des Fahrzeugs erfaßt, und einer Modulatoreinrichtung (10), die unter dem Einfluß einer Steuereinrichtung (15) aufgrund von Signalen von der Radschlupf-Sensoreinrichtung (16) von einem Schrittmotor (14) betätigt wird, um so den Bremsdruck im Bremsbetätigungselement (1) zu steuern, um die an das Rad (1A) angelegte Bremskraft zu verringern, um so den Schlupfzustand zu korrigieren, wobei der Modulator eine Kammer (10') definiert, deren Volumen durch die Bewegung eines Kolbens (10) unter der Wirkung des Schrittmotors verändert werden kann, um den Bremsdruck im Betätigungselement (1) während des Schlupfzustandes zu verringern, wobei der Kolben so angeordnet ist, daß seine Bewegung die Betätigung eines Abschlußventils (7) bewirkt, um die Verbindung zwischen der Primärdruckquelle (3) und dem Betätigungselement während des Schlupfzustandes zu unterbrechen und die Quelle (3) und das Betätigungselement erneut zu verbinden, wenn der Schlupfzustand korrigiert worden ist, dadurch gekennzeichnet, daß der Kolben (10) gestuft ist, um eine erste Fläche, die teilweise die Kammer (10') definiert, und eine zweite Fläche, die mit dem Druck von der Primärquelle (3) beaufschlagt wird, zu schaffen, derart, daß bei einem Ausfall des Schrittmotors in dem Zustand, in dem das Abschlußventil die Verbindung zwischen der Primärquelle (3) und dem Betätigungselement unterbrochen hat, der Kolben durch den Druck von der Primärdruckquelle (3) so bewegt wird, daß das Ventil geöffnet wird und die Quelle erneut mit dem Betätigungselement verbunden wird.

2. Ein Bremssystem gemäß Anspruch 1, dadurch gekennzeichnet, daß die Kammer (10') zwischen einem Ende des Kolbens und einem festen Ende und den zylindrischen Wänden des Zylinders definiert ist und eine mit der Primärdruckquelle (3) verbundene zweite Kammer (19) zwischen einer festen Endwand und zylindrischen Wänden des Zylinders und einer Schulter des Kolbens, die sich in einem bestand von der festen Endwand befindet und dieser zugewandt ist, definiert ist, wobei die Kammer (19) mit der Primärdruckquelle so verbunden ist, daß die Kolbenschulter mit dem Fluiddruck in der Primärdruckquelle beaufschlagt wird.

3. Ein Bremssystem gemäß Anspruch 1 oder Anspruch 2, dadurch gekennzeichnet, daß eine Leitung (6, 17, 18) die Kammern (10', 19) miteinander verbindet, wobei ein Teil der Leitung einen Ventilsitz (6a) bildet und ein in bezug auf den Zylinder festes Ventilelement (7) enthält, wobei das Ventilelement durch die Bewegung des Kolbens mit dem Sitz (60) in Eingriff und außer Eingriff gelangt.

4. Ein Bremssystem gemäß Anspruch 3, in dem das Ventilelement an einer am Zylinder befestigten Stange (9) gehalten wird.

5. Ein Bremssystem gemäß Anspruch 4, in dem sich die Ventilelement-Haltestange (9) durch einen Teil (6) der Leitung und durch den Ventilsitz (60) erstreckt und das Ventilelement (7) in einer in bezug auf das Gehäuse vorgegebenen Position hält, so daß der Betrieb des Schrittmotors für die Bewegung des Kolbens entsprechend ein Öffnen und ein Schließen des Abschlußventils bewirkt.

6. Ein Bremssystem gemäß einem der Ansprüche 3 bis 5, dadurch gekennzeichnet, daß die Leitung einen axial sich erstreckenden Bereich (6, 17) und einen radial sich erstreckenden Bereich (18) enthält.

7. Ein Bremssystem gemäß einem der vorangehenden Ansprüche, in dem die Veränderung des Bremsdrucks durch die Veränderung der Geschwindigkeit des Schrittmotors (14) gesteuert wird.

8. Ein Bremssystem gemäß einem der vorangehenden Ansprüche, dadurch gekennzeichnet, daß der Schrittmotor (14) mittels eines Mechanismus funktional verbunden ist, der ein umschaltbares Schraubengewinde (12) enthält und ermöglicht, daß der auf die zweite Kolbenfläche wirkende Druck von der Primärdruckquelle den Kolben in einer Richtung bewegt, in der das Abschlußventil geöffnet wird.

## Revendications

1. Système hydraulique de freinage pour véhicule, comprenant une source principale de pression (3) apte à être mise en service pour exercer une pression de freinage sur un dispositif d'entraînement (1) de frein de roue, un moyen de détection (16) conçu pour détecter un état de patinage naissant de la roue (1A) lorsque le véhicule roule, ainsi qu'un dispositif de modulateur (10) entraîné par un moteur pas-à-pas (14) sous l'influence d'un moyen de réglage (15), en réponse à des signaux émanant du moyen de détection de patinage de roue (16), de façon à régler la pression de freinage régnant au sein du dispositif d'entraînement de frein (1) afin de réduire la force de freinage s'exerçant sur la roue (1A) dans le but de corriger l'état de patinage, le modulateur définissant une chambre (10') dont le volume peut varier à l'intervention du mouvement d'un piston (10) sous l'action du moteur pas-à-pas, afin de réduire la pression de freinage régnant au sein du dispositif d'entraînement (1) au cours dudit état de patinage, le piston étant conçu de telle sorte que ledit mouvement de ce dernier résulte dans la mise en service d'une soupape d'arrêt (7) destinée à déconnecter la source principale de pression (3) du dispositif d'entraînement au cours de l'état de patinage et à reconnecter la source (3) et le dispositif d'entraînement lorsque l'état de patinage a été corrigé, **caractérisé en ce que** le piston (10) est un piston à gradins destiné à procurer une première zone définissant partiellement la chambre (10') et une seconde zone soumise à la pression provenant de la source principale (3) de telle sorte que, en cas de défaillance du moteur pas-à-pas lorsque la soupape d'arrêt a déconnecté la source principale (3) du dispositif d'entraînement, le piston se déplace par pression provenant de la source principale de pression (3) de façon à ouvrir la soupape et à reconnecter la source au dispositif d'entraînement.

2. Système de freinage selon la revendication 1, **caractérisé en ce que** la chambre (10') est définie entre une extrémité du piston et une extrémité fixe et des parois cylindriques du cylindre, et une seconde chambre (19) reliée à la source principale de pression (3) est définie entre une paroi à extrémité fixe et une paroi cylindrique du cylindre et un épaulement du piston écarté de ladite paroi à extrémité fixe de piston, tout en étant opposé à cette dernière, la chambre (19) étant reliée à la source principale de pression de telle sorte que l'épaulement du piston est soumis à une pression de fluide dans la source principale de pression.

3. Système de freinage selon la revendication 1 ou 2, **caractérisé en ce qu'**un conduit (6, 17, 18) relie mutuellement les chambres (10', 19), une partie du conduit constituant un siège de soupape (6A) et contenant un élément de soupape (7) fixe par rapport au cylindre, l'élément de soupape venant se mettre en contact avec le siège (6A) et se dégageant de ce dernier à l'intervention du mouvement du piston.

4. Système de freinage selon la revendication 3, dans lequel l'élément de soupape est supporté sur une tige (9) fixée au cylindre.

5. Système de freinage selon la revendication 4, dans lequel la tige de support de l'élément de soupape (9) s'étend à travers une partie (6) du conduit et à travers le siège de soupape (6A) et supporte l'élément de soupape (16) dans une position prédéterminée par rapport au logement, de telle sorte que la mise en service du moteur pas-à-pas destiné à déplacer le piston, provoque l'ouverture et la fermeture correspondantes de la soupape d'arrêt.

6. Système de freinage selon l'une quelconque des revendications 3 à 5, **caractérisé en ce que** le conduit englobe une portion (6, 17) s'étendant en direction axiale et une portion (18) s'étendant en direction radiale.

7. Système de freinage selon l'une quelconque des revendications précédentes, dans lequel on règle la variation de ladite pression de freinage en faisant varier la vitesse du moteur pas-à-pas (14).

8. Système de freinage selon l'une quelconque des revendications précédentes, **caractérisé en ce que** le moteur pas-à-pas (14) est relié en entraînement au piston (10) par un mécanisme qui englobe un filet de vis réversible (12), permettant à la pression provenant de la source principale de pression d'agir sur la seconde zone de piston afin de déplacer le piston dans une direction telle que la soupape d'arrêt s'ouvre.